# EUROPEAN PATENT APPLICATION

(11) **EP 4 116 607 A1**
(43) Date of publication of application: **11.01.2023**
(21) Application number: 21214572.6
(22) Date of filing: 14.12.2021
(51) Int. Cl.: F16J 3/02, F16K 17/16, F16K 17/40

(54) **A RUPTURE DISC ASSEMBLY FOR A ELECTRIC VEHICLE**

(30) Priority: 08.07.2021 KR 20210089765
(71) Applicant: FDC-AP Co.,Ltd., Gyeongsangnam-do 50877 (KR)
(72) Inventor: Yang Won, YUNE, Gyeongsangnam-do (KR)
(74) Representative: Gee, Steven William

(57) **Abstract**

The present invention relates to a lightweight and compact rupture disc that may be applied to a battery case of an electric vehicle. A top disc (10) of the rupture disc of the present invention comprises a rupture disc (12) made of a metallic material and a metal ring member (14) fixed to the rim of the rupture disc. A PFA seal disc (20) adheres to the back surface of the top disc (10) with an adhesive. Further, a support disc (30) is fixed to the back surface of the seal disc (20) using an adhesive. In addition, since the support disc of the present invention is pressed relatively thinner, so that the air permeability is increased as compared with other parts, and a rupture lines (36) is formed along the rupture of the rupture disc.

## Description

### BACKGROUND OF THE INVENTION

### Field of the Invention

The present invention relates to a rupture disc assembly for mounting on a battery casing of an electric vehicle, and more particularly, to such a rupture disc assembly for the battery casing of the electric vehicle which is designed to be lightweight overall and capable of reacting to low pressure generated in a relatively small structure such as a battery pack or a battery module of the electric vehicle.

### Background of the Related Art

A rupture disc is installed to allow gas therein to be discharged to the outside when a predetermined pressure or more is applied internally and used in various industrial fields. As in electric vehicles that have been rapidly widespread in recent years, such a rupture disc is generally provided in a casing such as a battery module and a battery pack in which a battery is embedded.

Since the rupture disc assembly disclosed in Korean Patent Application No. 10-1923169 (Korean Patent Publication No. 10-2017-0136394), a prior patent document to a general rupture disc, is entirely comprised of metal components, the rupture disc had to be made relatively large and heavy. However, when a casing of an electric vehicle as aforementioned is lighter than industrial structures while there is an abnormal event, the pressure applied to the inside of the casing is relatively low.

### SUMMARY OF THE INVENTION

Accordingly, it is inevitable that there is a constraint in design a rupture disc assembly used in a casing, such as a battery pack of an electric vehicle has to be implemented as lightweight while compact overall. Therefore, the present invention has been made in view of the above problems, and it is an object of the present invention to provide a rupture disc for an electric vehicle, which may be implemented compact and lightweight.

To accomplish the above object, according to one aspect of the present invention, there is provided a top disc of a rupture disc including a rupture disc made of a metallic material, and a metal ring member fixed to a rim of the rupture disc. A seal disc made of Perfluoroalkoxy (PFA) material is adhered to the back surface of the top disc with an adhesive. In addition, a support disc made of Polytetrafluoroethylene (PTFE) is fixed to the back surface of the seal disc using an adhesive. Further, since the support disc of the present invention is patrially pressed relatively thinly, to form rupture lines so that the air permeability is increased as compared with other parts, and a rupture line is formed along when the rupture disc ruptures.

In the present invention, it is preferable that the rupture lines are formed in a star shape that is divided into six equal parts with respect to the center of the support disc.

### BRIEF DESCRIPTION OF THE DRAWINGS

FIG. 1 is an exemplary perspective view of a rupture disc assembly according to the present invention.
FIG. 2 is an exemplary cross-sectional view of a rupture disc assembly according to the present invention.
FIG. 3 is an exemplary front view of a support disc of a rupture disc assembly according to the present invention.

### DESCRIPTION OF SYMBOLS

- 10:: Top disc
- 12:: Rupture disc
- 14:: Ring member
- 20:: Seal disc
- 30:: Support disc
- 32:: Adhesive tape
- 36:: Rupture line

### DETAILED DESCRIPTION OF THE PREFERRED EMBODIMENT

Hereinafter, embodiments according to the present invention will be described in detail with reference to the accompanying drawings.

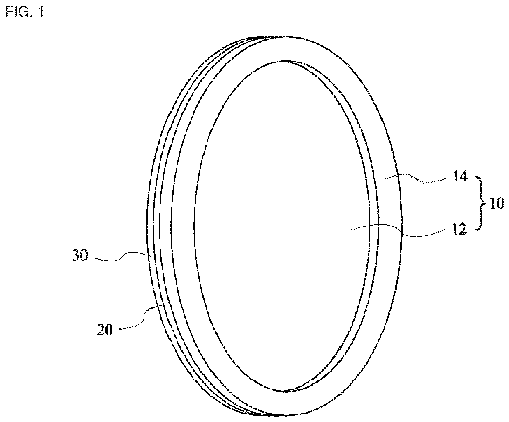

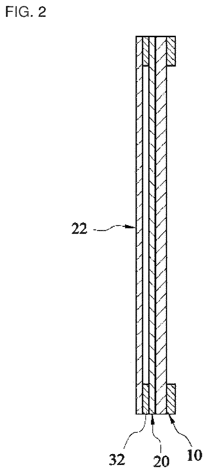

As shown in FIGS. 1 and 2, a rupture disc assembly according to the present invention may include a top disc 10 installed on the upper-most or on the outside and designed to rupture at a predetermined pressure, a seal disc 20 adhered to the back surface of the top disc 10 which serves to ensure hermeticity, and a support disc 30 adhered to the back surface of the seal disc 20 with the fine air permeability, which has a function of supporting against back pressure.

The top disc 10 is provided so as to be rupturable when the abnormal pressure generated inside the casing of the electric vehicle exceeds a predetermined value. The top disc 10 comprises a rupture disc 12 made of metallic material, a ring member 14 made of metallic material fixed to and supported by the rim portion of the rupture disc 12, for example, by welding. The ring member 14 has a flat shape that may be brought into surface contact with the rupture disc 12.

The rupture disc 12 supported by the ring member 14 in the above-mentioned prior art comprises a plurality of entirely circular arc-shaped slit lines, an interval formed between the slit lines and connecting the inner and outer portions. It is already known that one of the plurality of intervals comprises a long hinge in the arc direction.

The structure of the slit line and the interval of the rupture disc 12 are widely used, and a detailed description thereof will be omitted. When the pressure inside the battery casing of the electric vehicle exceeds a predetermined value, the rupture disc 12 may rupture. For example, upon rupture of the rupture disc 12, a plurality of intervals is cut and only one hinge leaves a portion of the disc in engagement with the rim portion associated with the ring member 14.

In this way, a circular seal disc 20 is provided on the lower portion (inner side) of the top disc 10 comprising the rupture disc 12 and the ring member 14. Here, it may be said that the seal disc 20 is made of perfluoroalkoxy (PFA) resin and is provided so as to ensure hermeticity. PFA is a resin, which is excellent in corrosion resistance, chemical resistance, and the like, having sufficient mechanical strength, which is used in various industrial fields, and in the present invention, it may be said that PFA is used for sealing while utilizing the hermeticity and stretchability of PFA.

Since the seal disc 20 is made of a lightweight resin, a fixing element such as a metal piece is not required. Accordingly, an adhesive or an adhesive tape coated with the adhesive may be sufficiently adhered and fixed to the back surface of the rupture disc 12 of the top disc 10. Here, since a rupture disc assembly according to the present invention is mounted on a battery casing of an electric vehicle, it is preferred to use a thermosetting adhesive.

The support disc 30 is fixed to the back surface of the seal disc 20. The support disc 30 has a sheet shape made of polytetrafluoroethylene (PTFE). PTFE is well known under the trademark Teflon^{™} and is known to have chemical resistance and a smooth surface. PTFE has high strength and toughness that belongs to organic polymers comprising large molecules made by chemically bonding many small molecules (in units) in the form of chains or nets.

Such PTFE is known to be fine but air-permeable due to having a porous structure. In the present invention, the support disc 30 is intended to be used by utilizing the property of the PTFE having such air permeability. Here, the hermeticity of the rupture disc assembly utilizes the seal disc 20 comprise of the PFA resin as described above. It goes without saying that by molding the seal disc 20 as well as the support disc 30 from a synthetic resin material in this way, and naturally, it would be significantly advantageous to reduce the weight of the rupture disc assembly.

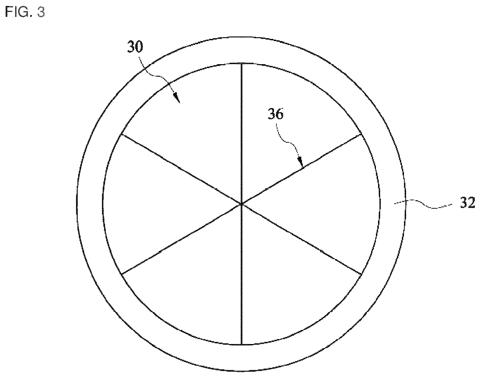

As shown in an embodiment of FIG. 3, the ring-shaped adhesive tape 32 is attached to the rim of the support disc 30. The adhesive tape 32 is for adhering the support disc 30 to the back surface of the seal disc 20. By forming the support disc 30 from a lightweight material as described above, it may be seen that an adhesive tape can be used even in the case of being assembled into a rupture disc assembly. In order to fix the seal disc 20 and the support disc 30 described above, it is substantially the same meaning that an adhesive or an adhesive tape is used.

In the present invention, the support disc 30 is provided with a plurality of rupture lines 36 which are equally divided with respect to the center thereof so as to provide air permeability of the support disc 30 and to be accurately separated at the time of rupture. In the illustrated in an embodiment, it may be seen that the rupture lines 36 has a star shape so that the support disc 30 may be bisected at the same angle with respect to the center.

The rupture liness 36 is made substantially by further thinning the corresponding portion of the support disc 30. For example, by pressing the support disc 30 using a mold having a blade, as shown in FIG. 3, a star-shaped rupture line 36 that divides into six equal parts with respect to the center of the support disc 30 is formed. It will be appreciated that such a shape of the rupture line 36 is exemplary.

The line of rupture 36 makes the portion thinner and more air-permeable. The high air permeability of the portion formed with the rupture lines 36 means that the amount of air passing through the portion is increased and that the portion tends to rupture more easily. That is, when high pressure is generated due to an abnormality event occurring inside a battery casing of an electric vehicle, the high pressure of gas passes through the rupture lines 36 of the support disc 30 and is delivered to the seal disc 20.

Here, since the seal disc 20 itself has lower rupture strength than the rupture disc 12, but is in a state close to the top disc 10, the internal pressure applied to the seal disc 20 is flowed to the rupture disc 12 of the top disc 10. When the pressure flowed to the rupture disc 12 has a force equal to or greater than a predetermined value, the rupture disc 12 of the top disc 10 ruptures, and the abnormally high pressure inside the battery casing may be eliminated.

Not only the seal disc 20 having a weak strength may be ruptured due to the rupture in the rupture disc 12, but the support disc 30 ruptures along the rupture lines 36. As described above, it may be seen that the rupture lines 36 of the support disc 30 increases the air permeability so that the high pressure inside the battery casing of the electric vehicle may accurately flowed to the seal disc 20, and at the same time, the rupture shape of the supporting disc 30 is determined at the same time of rupture.

An abnormal event that may occur inside the battery casing of the electric vehicle may be said to be substantially a low pressure as compared to an abnormally high pressure generated substantially in other industrial fields. In addition, the battery casing includes the battery pack for the electric vehicle, the battery module, and the like may be substantially small. In view of the background of the portion on which the rupture disc assembly of the present invention is mounted as described above, it will be understood that it is most preferable to use an adhesive while the rupture disc assembly of the present invention uses lightweight material.

According to a rupture disc assembly of the present invention having a configuration as described above, since the seal disc and the support disc are molded with synthetic resins like PFA and PTFE, lightweight and compact in size may be possible overall. In addition, synthetic resins like PFA and PTFE may be fixed with an adhesive, preferably a thermosetting adhesive, which is further advantageous in reducing the weight of the rupture disc assembly.

The rupture disc assembly, naturally, may be reduced in weight and compact sized, which is more advantageous for reducing the weight of electric vehicles. In addition, it is expected that the rupture disc assembly may be made lightweight and compact in size, which is more suitable for use in a rupture disc for a battery case of an electric vehicle that ruptures at relatively low pressure.

## Claims

1. The rupture disc assembly comprising:
a top disc providing a rupture disc made of a metallic material and a metal ring member fixed to the **rim of the rupture disc;**
**a seal disc made of PFA material adhered inside of the top disc; and**
a support disc made of PTFE material adhered to an inner surface of the seal disc;
wherein by using an adhesive, the seal disc and the support disc fixed to a top disc and the seal disc, respectively; **and**
the support disc being pressed thinly to form a rupture lines along with the rupture disc so that the air permeability is higher than other portions, the rupture lines being ruptured upon the rupture of the rupture disc.

2. The rupture disc assembly according to claim 1, wherein
the rupture lines is molded in a star shape that divides into six equal parts with respect to the center of the support disc.

3. The rupture disc assembly according to claim 1, wherein
the ring member is flat having surface contact with the rupture disc 12.
